# EUROPÄISCHE PATENTSCHRIFT

(11) **EP 3 652 800 B1**
(45) Veröffentlichungstag und Bekanntmachung des Hinweises auf die Patenterteilung: **27.12.2023**
(21) Anmeldenummer: 18753058.9
(22) Anmeldetag: 09.07.2018
(51) Int. Cl.: F16K 49/00, H01M 8/04225, H01M 8/0438, H01M 8/04537, H01M 8/04746, H01M 8/04089, H01M 8/0432

(54) **BRENNSTOFFZELLENVORRICHTUNG UND VERFAHREN ZUM BETREIBEN EINER BRENNSTOFFZELLENVORRICHTUNG**
FUEL CELL DEVICE AND METHOD FOR OPERATING A FUEL CELL DEVICE
DISPOSITIF DE PILE À COMBUSTIBLE ET PROCÉDÉ SERVANT À FAIRE FONCTIONNER UN DISPOSITIF DE PILE À COMBUSTIBLE

(30) Priorität: 14.07.2017 DE 102017115871
(43) Veröffentlichungstag der Anmeldung: 20.05.2020
(73) Patentinhaber: EKPO Fuel Cell Technologies GmbH, 72581 Dettingen (DE)
(72) Erfinder: HEMMER, Stefan, 72555 Metzingen (DE); STAHL, Peter, 72555 Metzingen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2018/068567
(87) Internationale Veröffentlichungsnummer: WO 2019/011872

(56) Entgegenhaltungen:
- DE-A1-102004 055 728
- DE-A1-102007 017 459
- DE-A1-102007 051 811
- DE-A1-102007 051 814
- US-A1- 2008 053 530

## Beschreibung

Die vorliegende Erfindung betrifft eine Brennstoffzellenvorrichtung, die ein Mediensystem zur Zufuhr von fluiden Medien zu elektrochemischen Einheiten der Brennstoffzellenvorrichtung und/oder zur Abfuhr von fluiden Medien aus den elektrochemischen Einheiten der Brennstoffzellenvorrichtung umfasst, wobei das Mediensystem mindestens ein Ventil umfasst, dem in einem Standardbetriebszustand der Brennstoffzellenvorrichtung eine elektrische Standardeingangsleistung zuführbar ist, um das Ventil in einem gewünschten Ventilzustand zu halten.

Brennstoffzellenvorrichtungen, die den Betrieb von Brennstoffzellen oder Brennstoffzellenstapeln ermöglichen, umfassen üblicherweise einen oder mehrere Brennstoffzellenstapel sowie periphere Baugruppen zur Erfüllung der folgenden Aufgaben:
- Abgriff und Regelung der elektrischen Leistung;
- Zufuhr der erforderlichen Reaktionsmedien zum Brennstoffzellenstapel und Abfuhr der Reaktionsmedien vom Brennstoffzellenstapel;
- Kühlung des Brennstoffzellenstapels;
- Überwachung, Steuerung und Regelung von Systemfunktionalitäten.

Das Mediensystem, insbesondere zur Zufuhr des anodenseitigen Fluids (Brenngas), des kathodenseitigen Fluids (Oxidationsmittel) und des Kühlfluids, beinhaltet zusätzlich zu Leitungen oder Kanälen zur Führung der Medien auch Funktionsgruppen zur Erfassung von Messgrößen (beispielsweise Druck, Temperatur, Volumenstrom, Massenstrom, Feuchte, Konzentrationen etc.) sowie aktive oder passive Baugruppen wie beispielsweise Ventile, Befeuchter, Wasserabscheider etc.

Die Baugruppen oder Bauteile, welche die beschriebenen Funktionalitäten aufweisen und auch als Funktionsgruppen bezeichnet werden, können in unmittelbarer Nähe zum Brennstoffzellenstapel angeordnet sein und mit diesem auch mechanisch verbunden sein. Diese Baugruppen oder Bauteile können in Bestandteile des Brennstoffzellenstapels, wie beispielsweise die Endplatten, zwischen denen die elektrochemischen Einheiten der Brennstoffzellenvorrichtung gegeneinander verspannt sind, direkt integriert werden; hierdurch wird insbesondere der Vorteil eines kurzen Abstandes zwischen den Funktionsgruppen und dem Brennstoffzellenstapel erzielt und/oder durch eine Integration die Bauteilanzahl und/oder die Systemkomplexität reduziert.

Die Reaktionsmedien, insbesondere ein anodenseitiges Brenngas und ein kathodenseitiges Oxidationsmittel, werden dem Brennstoffzellenstapel mittels des Mediensystems zugeführt und aus den elektrochemischen Einheiten der Brennstoffzellenvorrichtung abgeführt.

Das Mediensystem der Brennstoffzellenvorrichtung kann ein anodenseitiges Mediensystem, ein kathodenseitiges Mediensystem und/oder ein Kühlmittel-Mediensystem umfassen.

Um den Nutzungsgrad der Reaktionsmedien zu erhöhen, können die Reaktionsmedien vom Auslass des Brennstoffzellenstapels in einem Rezirkulationskreis wieder zum Einlass des Brennstoffzellenstapels zurückgeführt werden. Für diese Rückführung können aktive Pumpen oder Verdichter oder passive Strahlpumpen (auch als Ejektoren bezeichnet) eingesetzt werden.

Um den Eintrag von flüssigem Wasser, beispielsweise durch den Reaktionsmedien-Einlass des Brennstoffzellenstapels, in den Brennstoffzellenstapel zu vermeiden, können aktive oder passive Wasserabscheider im Rezirkulationskreis eingesetzt werden. Um das Kondensat aus diesen Wasserabscheidern zu entfernen, können aktive oder passive Drainageventile eingesetzt werden.

Über ein Spülventil kann das anodenseitige Mediensystem zyklisch für kurze Zeit zur Umgebung der Brennstoffzellenvorrichtung hin geöffnet werden, um in dem anodenseitigen Mediensystem akkumuliertes Wasser und/oder Wasserdampf sowie Abgas abzuführen und die Wasserstoffkonzentration im anodenseitigen Mediensystem zu erhöhen.

Bei bekannten Brennstoffzellenvorrichtungen werden im Mediensystem des kathodenseitigen Fluids aktive oder passive Ventile eingesetzt, die den gasdichten Verschluss des Brennstoffzellenstapels im Stillstand gewährleisten und/oder Fluidströme regeln oder steuern. Solche Ventile können insbesondere als Druckregelventile, Medium-Absperrventile, Befeuchter-Bypass-Ventile, Drainageventile etc. ausgebildet sein.

Im anodenseitigen Mediensystem werden ebenfalls aktive oder passive Ventile eingesetzt, die Fluidströme regeln oder steuern. Diese Ventile können beispielsweise als Druckregelventile, Medium-Absperrventile, Drainageventile oder Spülventile etc. ausgebildet sein.

Sowohl Brennstoffzellenvorrichtungen, die in stationären Anwendungen eingesetzt werden, als auch Brennstoffzellenvorrichtungen, die in mobilen Anwendungen eingesetzt werden, müssen in der Regel unter Frostbedingungen, das heißt bei Temperaturen unter 0°C, gelagert und gestartet werden können.

Wenn in der Brennstoffzellenvorrichtung Temperaturen von unter 0°C herrschen, kann Wasser in dem Mediensystem, insbesondere im anodenseitigen Mediensystem und im kathodenseitigen Mediensystem, gefrieren und Strömungswege blockieren oder verändern. Außerdem können die Funktionen von Aktoren, insbesondere von Ventilen, und/oder von Sensoren der Brennstoffzellenvorrichtung durch Eisbildung beeinträchtigt werden. Vor allem metallische Bauteile kühlen bei entsprechenden Umgebungsbedingungen durch ihre gute Wärmeleitung schneller ab als Komponenten mit schlechterer Wärmeleitung und stellen daher einen Kondensationspunkt dar, an dem eine erhöhte Gefahr von Eisbildung besteht.

Es kann daher erforderlich sein, einzelne Baugruppen, Bereiche oder Fluide in der Brennstoffzellenvorrichtung mit zusätzlichen Heizelementen im Falle eines Starts der Brennstoffzellenvorrichtung unter Frostbedingungen vorzuwärmen, um Vereisungen aufzutauen oder den Transport von Wasser aus Bereichen heraus zu ermöglichen, in denen es zu Eisbildung kommen kann. Hierdurch entsteht ein erhöhter Aufwand in der Brennstoffzellenvorrichtung, was den Wirkungsgrad verringert, den Bauraum vergrößert und die Kosten erhöht.

Die DE 10 2007 051 811 A1 und die DE 10 2007 051 814 A1 offenbaren Brennstoffzellenvorrichtungen gemäß dem Oberbegriff von Anspruch 1.

Der vorliegenden Erfindung liegt die Aufgabe zugrunde, eine Brennstoffzellenvorrichtung der eingangs genannten Art zu schaffen, welche mit möglichst geringem Aufwand auch unter Frostbedingungen zuverlässig gestartet werden kann.

Diese Aufgabe wird durch eine Brennstoffzellenvorrichtung nach Anspruch 1 gelöst.

Der vorliegenden Erfindung liegt somit das Konzept zugrunde, ein elektrisch, insbesondere elektromagnetisch oder elektromotorisch, betätigbares Ventil, welches im Mediensystem der Brennstoffzellenvorrichtung eingesetzt ist, nicht nur zum Steuern oder Regeln eines Fluidstromes, sondern auch zum Heizen der Brennstoffzellenvorrichtung zu verwenden.

Wenn beim Start der Brennstoffzellenvorrichtung Eis im Mediensystem vorhanden ist, kann durch die erhöhte elektrische Heizeingangsleistung, welche in Wärme gewandelt wird, die Temperatur des Ventils selbst und der unmittelbaren Umgebung des Ventils über die Schmelztemperatur von Wasser gehoben werden.

Bei einem elektromagnetisch betätigbaren Ventil, dessen Betätigungsvorrichtung eine Magnetspule umfasst, kann beispielsweise im Heizbetriebszustand die Magnetspule des Ventils mit einer gegenüber der Standardeingangsleistung erhöhten Heizeingangsleistung beaufschlagt werden. Dabei wird die Heizeingangsleistung des Ventils während des Aufheizvorgangs vorzugsweise so gewählt, dass keine Überhitzung des Ventils auftritt.

Dabei kann das Ventil im Heizbetriebszustand dauerhaft in einer gleichbleibenden Schaltstellung, beispielsweise im Ventilzustand "geöffnet" oder im Ventilzustand "geschlossen", gehalten werden.

Wenn das Ventil einen Ventilanker umfasst, so liegt der Ventilanker dabei üblicherweise an einem der Endanschläge des Ventils an.

Alternativ hierzu kann ein Ventil, das durch Federkraft oder durch die Schwerkraft in einen Ruhe-Ventilzustand zurückstellbar ist, durch eine entsprechend hohe Heizeingangsleistung in einem beliebig gewählten Ventilzustand zwischen den Grenz-Ventilzuständen "geöffnet" und "geschlossen" gehalten werden.

Ferner ist es möglich, ein Ventil im Heizbetriebszustand mit einer Heizeingangsleistung unterhalb der für einen Schaltvorgang des Ventils erforderlichen Schaltleistung zu beaufschlagen, ohne die Schaltstellung des Ventils zu verändern. So kann ein Ventil, das im unbestromten Zustand geschlossen ist (sogenanntes NC-Ventil) oder im unbestromten Zustand geöffnet ist (sogenanntes NO-Ventil) im geschlossenen Zustand beziehungsweise im geöffneten Zustand verweilen, während es mit einer Heizeingangsleistung, welche unterhalb der Schaltleistung liegt, beaufschlagt wird, um das Ventil zu heizen.

Ferner kann ein Ventil ohne Spannungsgleichrichter, das sich in einer Schaltstellung befindet, welche durch einen Endanschlag definiert ist, mit einer Heizspannung beaufschlagt werden, deren Polarität entgegengesetzt zu der Polarität einer für eine Veränderung der Schaltstellung erforderlichen Schaltspannung ist, um das Ventil zu heizen, ohne dass sich die Schaltstellung des Ventils ändert.

Dabei kann die Heizspannung, mit welcher das Ventil im Heizbetriebszustand beaufschlagt wird, grundsätzlich beliebig hoch gewählt werden, sofern dabei die elektrische und die thermische Belastbarkeit des Ventils und der das Ventil umgebenden Bauteile nicht überschritten wird.

Ferner kann ein Ventil im Heizbetriebszustand mittels einer pulsweitenmodulierten Ansteuerung mit einer hohen Frequenz (vorzugsweise mit einer Frequenz größer als 1 Hz) zwischen diskreten Schaltstellungen, beispielsweise zwischen der Schaltstellung "geöffnet" und "geschlossen", umgeschaltet werden.

Dabei kann die Verweilzeit in der jeweiligen Schaltstellung so variiert werden, dass die Durchflussrate durch das Ventil stufenlos auf einen gewünschten Wert zwischen nahezu voller Durchflussrate und nahezu Durchflussrate null einstellbar ist.

Durch das schnelle Umschalten zwischen den Schaltstellungen kann die Heizeingangsleistung im Vergleich zur minimal erforderlichen Schaltleistung deutlich erhöht werden, zumindest sofern keine Beschädigungen des Ventils, insbesondere durch Überhitzung, auftreten können.

Durch die erfindungsgemäße Ausgestaltung einer Brennstoffzellenvorrichtung kann auf zusätzliche Heizelemente in der Brennstoffzellenvorrichtung verzichtet werden, wodurch der Herstellungs- und der Betriebsaufwand der Brennstoffzellenvorrichtung verringert werden.

Das Einbringen der Heizleistung direkt an einem Ventil ist ferner besonders günstig, weil gerade dort ein erhöhtes Risiko einer Beeinträchtigung der Systemfunktion durch Eisbildung besteht.

Die vorliegende Erfindung bietet den Vorteil, dass bestehende Ventiltypen unverändert eingesetzt werden können und/oder dass mit geringfügigen Anpassungen der bestehenden Ventiltypen die erfindungsgemäße Heizfunktion realisiert werden kann.

Vorzugsweise muss lediglich die Art der Ansteuerung des Ventils angepasst werden, um dasselbe im Heizbetriebszustand mit einer erhöhten Heizeingangsleistung zu beaufschlagen.

Die Ansteuerung des mindestens einen Ventils der Brennstoffzellenvorrichtung erfolgt vorzugsweise mittels einer Steuerungsvorrichtung der Brennstoffzellenvorrichtung oder mittels einer externen Steuerungsvorrichtung.

Um zu ermitteln, ob die Brennstoffzellenvorrichtung in den Heizbetriebszustand geschaltet werden muss, kann vorgesehen sein, dass die Brennstoffzellenvorrichtung einen Temperatursensor umfasst, mittels welchem vorzugsweise das Absinken einer Temperatur eines Bereichs der Brennstoffzellenvorrichtung auf eine Temperatur unter 0°C feststellbar ist.

Ein solcher Temperatursensor kann beispielsweise an oder in dem zu beheizenden Ventil angeordnet sein.

Wenn ein solches Absinken der Temperatur festgestellt wird, wird die Brennstoffzellenvorrichtung in den Heizbetriebszustand geschaltet.

Bei einer bevorzugten Ausgestaltung der Erfindung ist vorgesehen, dass das Ventil, mittels welchem die Brennstoffzellenvorrichtung beheizbar ist, elektromagnetisch oder elektromotorisch betätigbar ist.

Die elektrische Heizeingangsleistung des Ventils ist vorzugsweise so begrenzbar, dass eine Überhitzung des Ventils vermieden wird.

Zur Ermittlung, ob eine Überhitzungsgefahr besteht, kann ein Temperatursensor verwendet werden, welcher an oder in dem zu beheizenden Ventil angeordnet ist.

Das Ventil kann im Heizbetriebszustand dauerhaft geschlossen oder dauerhaft geöffnet sein.

Alternativ oder ergänzend hierzu kann vorgesehen sein, dass das Ventil im Heizbetriebszustand in einem vorgegebenen Ventilzustand zwischen dem vollständig geschlossenen Zustand und dem vollständig geöffneten Zustand haltbar ist.

Vorzugsweise liegt die dem Ventil im Heizbetriebszustand zuführbare elektrische Heizeingangsleistung unterhalb einer Schaltschwelleneingangsleistung, welche zum Umschalten des Ventils in einen anderen Ventilzustand benötigt wird.

Es kann vorgesehen sein, dass das Ventil im Heizbetriebszustand mit einer elektrischen Heizspannung beaufschlagbar ist, deren Polarität der Polarität einer zum Umschalten des Ventils in einen anderen Ventilzustand erforderlichen elektrischen Schaltspannung entgegengesetzt ist.

Alternativ oder ergänzend hierzu kann vorgesehen sein, dass das Ventil im Heizbetriebszustand pulsweitenmoduliert ansteuerbar ist.

Ferner kann vorgesehen sein, dass die dem Ventil im Heizbetriebszustand zugeführte elektrische Heizeingangsleistung in Abhängigkeit von einer mit einer Eisbildung im Mediensystem der Brennstoffzellenvorrichtung korrelierenden Messgröße variierbar ist.

Eine solche Messgröße kann insbesondere eine Temperatur oder einen Druck in einer Zuführleitung, mittels welcher der Brennstoffzellenvorrichtung ein kathodenseitiges Fluid oder ein anodenseitiges Fluid oder ein Kühlmittel zugeführt wird, sein.

Es kann vorgesehen sein, dass das Ventil im Heizbetriebszustand in einem vorgegeben Ventilzustand verbleibt.

Alternativ hierzu kann vorgesehen sein, dass das Ventil im Heizbetriebszustand zwischen mehreren verschiedenen Ventilzuständen wechselt.

Bei einer besonderen Ausgestaltung der Erfindung ist vorgesehen, dass die Brennstoffzellenvorrichtung eine Messvorrichtung zur Ermittlung eines elektrischen Innenwiderstandes einer Betätigungsvorrichtung des Ventils umfasst. Wenn der elektrische Innenwiderstand über einen Schwellenwert ansteigt, zeigt dies eine mögliche Überhitzung des Ventils an. Vorzugsweise wird daher die Heizeingangsleistung, mit welcher das Ventil beaufschlagt wird, reduziert, wenn ein solcher Anstieg des elektrischen Innenwiderstandes der Betätigungsvorrichtung des Ventils über den Schwellenwert hinaus festgestellt wird.

Das mindestens eine Ventil, welches zum Beheizen der Brennstoffzellenvorrichtung verwendbar ist, kann beispielsweise als ein Medium-Absperrventil, als ein Druckregelventil, als ein Drainageventil, als ein Spülventil oder als ein kombiniertes Spül-/Drainageventil ausgebildet sein.

Bei der Erfindung ist vorgesehen, dass die Brennstoffzellenvorrichtung einen Drucksensor und/oder einen Konzentrationssensor umfasst, aus dessen Signal ermittelbar ist, ob im Mediensystem eine Blockade durch Eisbildung vorliegt, wobei die Brennstoffzellenvorrichtung in Abhängigkeit vom Ergebnis der Ermittlung in den Heizbetriebszustand oder in den Standardbetriebszustand schaltbar ist.

Mittels des Drucksensors kann beispielsweise der Druck des anodenseitigen Mediums am Anodengas-Einlass des Brennstoffzellenstapels oder der Druck des kathodenseitigen Mediums am Kathodengas-Einlass des Brennstoffzellenstapels messbar sein.

Mittels des Konzentrationssensors kann beispielsweise eine Wasserstoffkonzentration im Mediensystem, insbesondere im anodenseitigen Mediensystem oder im kathodenseitigen Mediensystem, messbar sein.

Die vorliegende Erfindung betrifft ferner ein Verfahren zum Betreiben einer Brennstoffzellenvorrichtung, welche ein Mediensystem zur Zufuhr von fluiden Medien zu elektrochemischen Einheiten der Brennstoffzellenvorrichtung und/oder zur Abfuhr von fluiden Medien aus den elektrochemischen Einheiten der Brennstoffzellenvorrichtung umfasst, wobei das Mediensystem mindestens ein Ventil umfasst.

Der vorliegenden Erfindung liegt die weitere Aufgabe zugrunde, ein solches Verfahren zum Betreiben einer Brennstoffzellenvorrichtung zu schaffen, mittels welchem die Brennstoffzellenvorrichtung mit möglichst geringem Aufwand auch unter Frostbedingungen zuverlässig startbar ist.

Diese Aufgabe wird erfindungsgemäß durch ein Verfahren nach Anspruch 14 gelöst.

Besondere Ausgestaltungen des erfindungsgemäßen Verfahrens sind bereits vorstehend im Zusammenhang mit besonderen Ausgestaltungen der erfindungsgemäßen Brennstoffzellenvorrichtung erläutert worden.

Die erfindungsgemäße Brennstoffzellenvorrichtung eignet sich insbesondere zur Verwendung bei der Durchführung des erfindungsgemäßen Verfahrens.

Vorzugsweise ist die Heizeingangsleistung des Ventils um mindestens 10 %, insbesondere um mindestens 50 %, besonders bevorzugt um mindestens 100 %, größer als die Standardeingangsleistung.

Das Ventil kann vorzugsweise im Heizbetriebszustand mindestens zwei verschiedene Zustände aufweisen: einen Zustand, in dem das Ventil nur beheizt wird, ohne dass die Schaltstellung des Ventils geändert wird, und einen Zustand, in dem das Ventil beheizt wird und zugleich von einer Schaltstellung in eine andere Schaltstellung des Ventils umgeschaltet wird.

Erfindungsgemäß wird mindestens ein Ventil, das in einem Mediensystem einer Brennstoffzellenvorrichtung angeordnet ist, dazu verwendet, mittels der elektrischen Eingangsleistung, mit welcher das Ventil beaufschlagt wird, das Ventil selbst und dessen Umgebung aufzuheizen.

Vorzugsweise ist das zum Beheizen der Brennstoffzellenvorrichtung verwendete Ventil elektromagnetisch oder elektromotorisch betätigbar.

Das Ventil kann grundsätzlich beliebige Schaltstellungen und Anschlussvarianten aufweisen.

Beispielsweise kann ein Wegeventil mit der Anschlussart 2/2, mit der Anschlussart 3/2 oder mit einer anderen Anschlussart verwendet werden.

Das Ventil kann vorzugsweise verschiedene Schaltzustände durch Umpolung einer elektrischen Eingangsspannung des Ventils annehmen.

Alternativ oder ergänzend hierzu kann vorgesehen sein, dass das Ventil durch Federkraft und/oder durch Schwerkraft in einen Ventilzustand zurückgestellt wird.

Das Ventil kann ein diskretes Schaltventil, ein Proportionalventil, ein Taktventil oder ein Regelventil sein.

Wenn das Ventil elektromagnetisch betätigbar ist und die Betätigungsvorrichtung des Ventils eine Spulenanordnung umfasst, die durch Erzeugung eines Magnetfeldes einen Ventilkörper, beispielsweise einen Ventilanker, bewegt, so ist das Ventil vorzugsweise mit einer Heizeingangsleistung beaufschlagbar, welche höher ist als die Standardeingangsleistung. Durch die ohmsche Verlustleistung der Spulenanordnung ist das Ventil im Heizbetriebszustand aufheizbar.

Die Heizeingangsleistung liegt dabei vorzugsweise über der für das Schalten des Ventils minimal erforderlichen Schaltleistung.

Vorzugsweise wird die Heizeingangsleistung im Heizbetriebszustand so begrenzt, dass keine Überhitzung des Ventils auftritt.

Insbesondere kann vorgesehen sein, dass die Heizeingangsleistung während des gesamten Aufheizvorgangs so gewählt wird, dass sie dem maximalen Wert der Eingangsleistung entspricht, bei dem zu keiner Zeit eine schädigende Überhitzung des Ventils oder einer anderen Komponente der Brennstoffzellenvorrichtung eintritt.

Bei einer Ausgestaltung der Erfindung kann vorgesehen sein, dass die Bestromung des Ventils zum Zwecke der Aufheizung gegenüber einem Maximalwert reduziert wird, sofern eine Messgröße, beispielsweise eine gemessene Temperatur, die an einer geeigneten Stelle in der Brennstoffzellenvorrichtung gemessen wird, anzeigt, dass keine Beeinträchtigung der Funktionalität der Brennstoffzellenvorrichtung durch Eisbildung vorliegt oder eine gegebenenfalls vorliegende Beeinträchtigung im akzeptablem Rahmen liegt.

Hierdurch ist ein schneller Aufheizvorgang und/oder ein schnelles Aufschmelzen von in der Brennstoffzellenvorrichtung vorhandenem Eis gewährleistet.

Die Heizeingangsleistung, welche zur Aufheizung des Ventils eingesetzt wird, kann kontinuierlich oder intermittierend in das Ventil eingebracht werden.

Bei kontinuierlicher Einbringung der Heizeingangsleistung verharrt das Ventil vorzugsweise während des Aufheizvorgangs in einer Schaltstellung des Ventils.

Bei intermittierender Einbringung der Heizeingangsleistung, beispielsweise durch die Ansteuerung des Ventils mit einem pulsweitenmodulierten Signal, wird die Schaltstellung des Ventils im Heizbetriebszustand ständig verändert.

Dabei kann die Verweilzeit in den verschiedenen Schaltstellungen des Ventils so variiert werden, dass die Durchflussrate eines fluiden Mediums durch das Ventil stufenlos einstellbar ist, beispielsweise von einer Durchflussrate von nahezu null bis zu einer maximalen Durchflussrate.

Das Ventil kann während der Aufheizung im Heizbetriebszustand in einem diskreten Schaltzustand verweilen.

Das Ventil kann alternativ dazu durch eine intermittierende Bestromung im Heizbetriebszustand zyklisch zwischen zwei oder mehreren Schaltzuständen wechseln. Hierbei kann insbesondere ein monostabiles Ventil oder ein bistabiles Ventil verwendet werden.

Das Ventil kann während der Bestromung zum Zweck der Aufheizung geöffnet oder geschlossen sein.

Die Schaltstellung des Ventils kann während des Heizbetriebszustands durch Umpolung der Eingangsspannung des Ventils verändert werden. Hierdurch kann das Ventil insbesondere auch seine Funktion zum Öffnen oder Schließen eines Medienraumes weiterhin erfüllen.

Vorzugsweise ist der Innenwiderstand des Ventils messbar, um aus dem Messwert des Innenwiderstandes insbesondere die innere Temperatur des Ventils zu bestimmen. Diese Information ist insbesondere zum Schutz des Ventils und seiner Umgebung vor thermischer Überlastung während des Heizbetriebszustandes verwertbar.

Um einen räumlich möglichst großen Bereich der Brennstoffzellenvorrichtung durch das Ventil aufheizen zu können, kann vorgesehen sein, dass die thermische Leitfähigkeit der das Ventil umgebenen Bauteile der Brennstoffzellenvorrichtung durch die Auswahl geeigneter Materialien erhöht wird.

Als Materialien für das Ventil und/oder für das Ventil umgebende Bauteile der Brennstoffzellenvorrichtung sind insbesondere metallische Materialien oder Kunststoffmaterialien mit einem Zusatz, welcher die thermische Leitfähigkeit erhöht, beispielsweise mit einem keramischen, einem mineralischen und/oder einem metallischen Zusatz, verwendbar.

Das zur Beheizung der Brennstoffzellenvorrichtung verwendbare Ventil ist vorzugsweise benachbart zu einer Komponente der Brennstoffzellenvorrichtung angeordnet, deren Funktion unter Frostbedingungen sonst nicht oder nur eingeschränkt gewährleistet werden kann.

Insbesondere kann vorgesehen sein, dass das Ventil benachbart zu einer Düse, einem Strömungsweg eines Anodengases oder eines Kathodengases, einem Sensor (insbesondere einem Temperatursensor oder einem Drucksensor) oder einem Wasserabscheider angeordnet ist.

Das für eine Beheizung der Brennstoffzellenvorrichtung verwendbare Ventil kann insbesondere als ein Absperrventil auf der Anodenseite des Mediensystems, als ein Absperrventil auf der Kathodenseite des Mediensystems, als ein Druckregelventil auf der Anodenseite des Mediensystems, als ein Druckregelventil auf der Kathodenseite des Mediensystems, als ein Drainageventil auf der Anodenseite des Mediensystems, als ein Drainageventil auf der Kathodenseite des Mediensystems oder als ein Spülventil (auch als "Purge-Ventil" bezeichnet) ausgebildet sein.

Ein Drainageventil wird insbesondere zur Abscheidung überschüssigen Kondensats und/oder Wassers aus der Anodenseite des Mediensystems oder aus der Kathodenseite des Mediensystems verwendet.

Ein Spülventil wird insbesondere zur Spülung eines anodenseitigen Gasraums der Brennstoffzellenvorrichtung oder eines kathodenseitigen Gasraums der Brennstoffzellenvorrichtung verwendet.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: ein Rohrleitungs- und Instrumenten-Fließschema (R & I-Fließschema) eines Teils eines Mediensystems einer Brennstoffzellenvorrichtung, wobei das Mediensystem ein Druckregelventil und ein Spül-/Drainageventil umfasst; und
- Fig. 2: einen ausschnittsweisen Querschnitt durch die Brennstoffzellenvorrichtung mit dem Druckregelventil und dem Spül-/Drainageventil.

Gleiche oder funktional äquivalente Elemente sind in allen Figuren mit denselben Bezugszeichen bezeichnet.

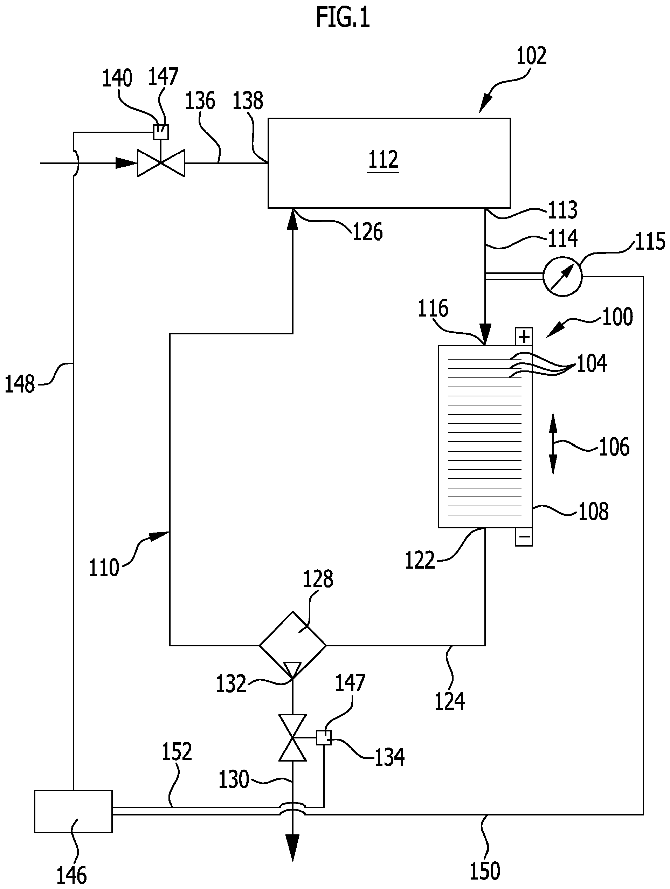

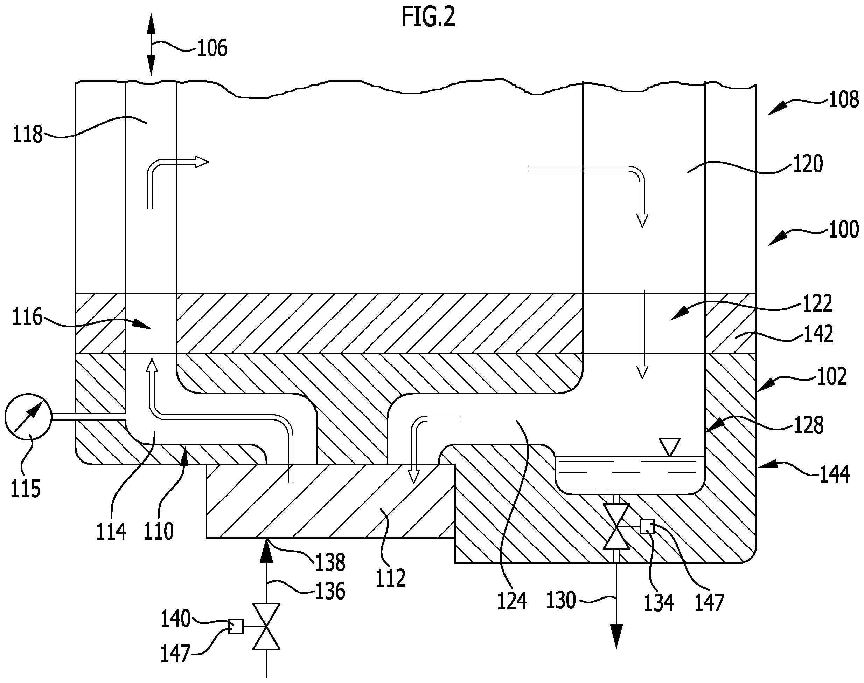

Eine in den Fig. 1 und 2 ausschnittsweise dargestellte, als Ganzes mit 100 bezeichnete Brennstoffzellenvorrichtung umfasst ein Mediensystem 102 zur Zufuhr von fluiden Medien zu elektrochemischen Einheiten 104 der Brennstoffzellenvorrichtung 100, welche in einem Stapel 108 längs einer Stapelrichtung 106 aufeinanderfolgend gestapelt sind, und/oder zur Abfuhr von fluiden Medien aus den elektrochemischen Einheiten 104 der Brennstoffzellenvorrichtung 100.

Den elektrochemischen Einheiten 104 zugeführte Medien können insbesondere ein Brenngas, ein Oxidationsmittel und/oder ein Kühlmittel sein.

Aus den elektrochemischen Einheiten 104 abgeführte Medien können insbesondere ein Anodenabgas, ein Kathodenabgas und/oder ein Kühlmittel sein.

Das Rohrleitungs- und Instrumenten-Fließschema in Fig. 1 zeigt einen Ausschnitt des Mediensystems 102, welches einen Rezirkulations-Kreislauf 110 für ein Brenngas der Brennstoffzellenvorrichtung 100 beinhaltet.

Der Rezirkulations-Kreislauf 110 umfasst ein Rezirkulationselement 112, das einen Anodengas-Auslass 113 aufweist, welcher über eine Anodengas-Zuführleitung 114 mit einem Anodengas-Einlass 116 des Stapels 108 aus elektrochemischen Einheiten 104 verbunden ist.

An der Anodengas-Zuführleitung 114 ist ein Drucksensor 115 angeordnet.

Wie aus Fig. 2 zu ersehen ist, steht der Anodengas-Einlass 116 in Fluidverbindung mit einem Anodengas-Zuführkanal 118, der sich in der Stapelrichtung 106 durch den Stapel 108 erstreckt.

Ein solcher Anodengas-Zuführkanal 118 wird auch als Anodengas-Manifold bezeichnet.

Durch den Anodengas-Zuführkanal 118 wird das Anodengas auf die anodenseitigen Gasräume der in der Stapelrichtung 106 aufeinanderfolgenden elektrochemischen Einheiten 104 verteilt.

Aus den anodenseitigen Gasräumen der elektrochemischen Einheiten 104 gelangt (teilweise elektrochemisch umgesetztes) Anodengas, das auch als Anodenabgas bezeichnet werden kann, in einen Anodengas-Abführkanal 120, welcher sich in der Stapelrichtung 106 durch den Stapel 108 erstreckt und in Fluidverbindung mit einem Anodengas-Auslass 122 des Stapels 108 steht.

Von dem Anodengas-Auslass 122 des Stapels 108 führt eine Anodengas-Rückführleitung 124 zu einem Anodengas-Rückführeinlass 126 des Rezirkulationselements 112.

In der Anodengas-Rückführleitung 124 ist ein Wasserabscheider 128 angeordnet.

In dem Wasserabscheider 128 aus dem Anodengas abgeschiedenes Wasser ist über eine Drainageleitung 130 abführbar, die an einen Drainageauslass 132 des Wasserabscheiders 128 angeschlossen ist.

An der Drainageleitung 130 ist ein Spül-/Drainageventil 134 angeordnet.

Über den Drainageauslass 132 und die Drainageleitung 130 ist bei geöffnetem Spül-/Drainageventil 134 auch ein Spülgas aus dem Rezirkulations-Kreislauf 110 abführbar.

Frisches Brenngas ist dem Rezirkulations-Kreislauf 110 über eine Brenngas-Zuführleitung 136 zuführbar, welche an einen Brenngas-Zuführeinlass 138 des Rezirkulationselements 112 angeschlossen ist.

In der Brenngas-Zuführleitung 136 ist ein Druckregelventil 140 angeordnet.

Das Druckregelventil 140 dient dazu, den Fluidstrom des Brenngases durch die Brenngas-Zuführleitung 136 im Betrieb der Brennstoffzellenvorrichtung 100 zu steuern oder zu regeln und die Brenngas-Zuführleitung 136 abzusperren, wenn kein Brenngas der Brennstoffzellenvorrichtung 100 zuzuführen ist.

Das Spül-/Drainageventil 134 dient dazu, den Eintrag von flüssigem Wasser in den Stapel 108 durch den Anodengas-Einlass 116 zu vermeiden.

Ferner kann über das Spül-/Drainageventil 134 das anodenseitige Mediensystem 102 zyklisch für jeweils kurze Zeit zur Umgebung der Brennstoffzellenvorrichtung 100 hin geöffnet werden, um im Mediensystem 102 akkumuliertes Wasser und Wasserdampf sowie Abgas abzuführen und die Wasserstoffkonzentration zu erhöhen.

Wie aus der Schnittdarstellung von Fig. 2 zu ersehen ist, können der Anodengas-Einlass 116 und der Anodengas-Auslass 122 des Stapels 108 als Durchtrittsöffnungen in einer Endplatte 142 des Stapels 108 ausgebildet sein.

Die elektrochemischen Einheiten 104 können zwischen der Endplatte 142 und einer weiteren (nicht dargestellten) Endplatte des Stapels 108 verspannt sein.

Der Wasserabscheider 128, die Anodengas-Rückführleitung 124, die Anodengas-Zuführleitung 114, der Drucksensor 115 und/oder das Rezirkulationselement 112 können in ein mit der Endplatte 142 in Kontakt stehendes Medienmodul 144 der Brennstoffzellvorrichtung 100 integriert sein.

Zeichnerisch dargestellt und vorstehend beschrieben ist nur die Anodenseite des Mediensystems 102.

Das Mediensystem 102 der Brennstoffzellenvorrichtung 100 kann auch eine entsprechend ausgebildete (nicht dargestellte) Kathodenseite umfassen.

Das Druckregelventil 140 und das Spül-/Drainageventil 134 und gegebenenfalls andere (nicht dargestellte) Ventile des Mediensystems 102 sind als aktive Ventile 147 ausgebildet, welche elektrisch, insbesondere elektromagnetisch oder elektromotorisch, betätigbar sind.

Insbesondere können diese Ventile 147 direkt gesteuerte, elektromagnetisch betätigte Plattenankerventile oder Tauchankerventile sein.

Das Druckregelventil 140 dient dazu, den gasdichten Verschluss des Stapels 108 im Stillstand zu gewährleisten und die Zufuhr von frischem Brenngas in den Rezirkulations-Kreislauf 110 nach Bedarf zu steuern oder zu regeln.

Der Durchfluss durch das Druckregelventil 140 kann insbesondere in Abhängigkeit von einem Druckmesswert eingestellt werden, der mittels des Drucksensors 115 ermittelt wird.

Das Druckregelventil 140 kann insbesondere als ein elektromagnetisch betätigbares Ventil ausgebildet sein, das mittels pulsweitenmodulierter Signale ansteuerbar ist.

Hierbei können beliebige Durchflussraten zwischen maximalem Durchfluss und minimalem Durchfluss (entsprechend einem Durchfluss von null) eingestellt werden, indem mit hoher Frequenz zwischen den Schaltstellungen "Auf" und "Zu" gewechselt wird und die Verweildauer in den jeweiligen Schaltstellungen je nach gewünschter Durchflussrate moduliert wird.

Die Ansteuerung des Druckregelventils 140 erfolgt durch eine Steuervorrichtung 146 der Brennstoffzellenvorrichtung 100 (siehe Fig. 1), welche über eine Steuerleitung 148 mit dem Druckregelventil 140 verbunden ist.

Die Steuervorrichtung 146 kann ferner über eine Signalleitung 150 mit dem Drucksensor 115 verbunden sein.

Ferner kann die Steuervorrichtung 146 über eine Steuerleitung 152 mit dem Spül-/Drainageventil 134 verbunden sein.

Wenn sich die Brennstoffzellenvorrichtung 100 in einem Standardbetriebszustand befindet, so wird dem Druckregelventil 140 eine elektrische Standardeingangsleistung zugeführt, um das Ventil 147 in dem jeweils gewünschten Ventilzustand ("geöffnet" oder "geschlossen") zu halten.

Wenn die Brennstoffzellenvorrichtung einer niedrigen Umgebungstemperatur ausgesetzt ist, beispielsweise einer Temperatur von weniger als 0°C, so wird die Steuervorrichtung 146 der Brennstoffzellenvorrichtung 100 in einen Heizbetriebszustand versetzt, in welchem dem Druckregelventil 140 eine elektrische Heizeingangsleistung zuführbar ist, die größer ist als die elektrische Standardeingangsleistung, um das Ventil 147 in dem jeweils gewünschten Ventilzustand ("geöffnet" oder "geschlossen") zu halten.

Dies kann beispielsweise dadurch erreicht werden, dass die zum Umschalten des Ventils 147 angelegte Schaltspannung, mit welcher eine Spulenanordnung einer elektromagnetischen Betätigungsvorrichtung des Ventils 147 beaufschlagt wird, im Heizbetriebszustand gegenüber der Schaltspannung im Standardbetriebszustand der Brennstoffzellenvorrichtung 100 erhöht wird.

Alternativ oder ergänzend hierzu kann vorgesehen sein, dass die Frequenz, mit welcher das Ventil 147 zwischen den beiden Ventilzuständen "geöffnet" und "geschlossen" hin und her geschaltet wird, im Heizbetriebszustand höher ist als im Standardbetriebszustand.

Durch die erhöhte ohmsche Verlustleistung der Betätigungsvorrichtung des Ventils 147, insbesondere einer Spulenanordnung des Ventils 147, im Heizbetriebszustand relativ zu dem Standardbetriebszustand wird so das Ventil 147 im Heizbetriebszustand aufgeheizt. Die durch erhöhte innere ohmsche Verluste entstehende Wärme führt zu einer Aufheizung des Ventilkörpers, und auch angrenzende Bereiche und Komponenten des Mediensystems 102 der Brennstoffzellenvorrichtung 100, insbesondere Strömungskanäle des Mediensystems 102, werden ebenfalls aufgeheizt, und unter Frostbedingungen im Mediensystem 102 vorliegendes Eis wird aufgetaut.

Zum Schutz von thermischer Überlastung kann der Innenwiderstand des Ventils 147 im Heizbetriebszustand der Brennstoffzellenvorrichtung 100 dazu verwendet werden, die innere Temperatur des Ventils 147 zu bestimmen und die elektrische Heizeingangsleistung, mit welcher das Ventil 147 beaufschlagt wird, zu reduzieren, wenn diese innere Temperatur des Ventils 147 auf einen zu hohen Wert ansteigt.

Das Spül-/Drainageventil 134 wird von der Steuervorrichtung 146 zyklisch geöffnet, um erst das im Wasserabscheider 128 angesammelte Wasser aus dem anodenseitigen Mediensystem 102 und dann Gas, insbesondere Abgas, mit einem Anteil von Brenngas und Wasserdampf, aus dem anodenseitigen Mediensystem 102 abzuscheiden.

Das im Wasserabscheider 128 akkumulierte Flüssigwasser soll bei einem Entleerungsvorgang möglichst vollständig entfernt werden, während nur eine definierte Menge an gasförmigen Stoffen abgeführt werden soll.

Um immer eine möglichst gleichbleibende Menge an gasförmigen Stoffen abzuführen, kann der mittels des Drucksensors 115 im Bereich des Anodengas-Einlasses 116 des Stapels 108 gemessene Druck dazu herangezogen werden, den Zeitpunkt zu bestimmen, an dem das Flüssigwasser aus dem Wasserabscheider 128 entfernt ist und vorwiegend nur noch gasförmige Stoffe aus dem Wasserabscheider 128 abgeführt werden. Der Druck im anodenseitigen Mediensystem 102 fällt nämlich während der Abführung von gasförmigen Stoffen in Abhängigkeit von der Öffnungszeit des Spül-/Drainageventils 134 schneller ab als während der Abführung von flüssigem Wasser.

Das Spül-/Drainageventil 134 ist beispielsweise als ein elektromagnetisch angesteuertes 2/2-Wegeventil ohne Gleichrichter ausgebildet, das vorzugsweise mittels einer Rückstellfeder stromlos geschlossen wird. Ein solches Ventil 147 wird als ein monostabiles Ventil bezeichnet. Da ein Ventil 147 ohne Gleichrichter verwendet wird, muss, um das Ventil 147 zu öffnen, eine Eingangsspannung mit der korrekten Polarität angelegt werden.

Wenn die Brennstoffzellenvorrichtung 100 sich in dem Heizbetriebszustand befindet, wird das Spül-/Drainageventil 134 von der Steuervorrichtung 146 mit einer im Vergleich zur elektrischen Standardeingangsleistung im Standardbetriebszustand der Brennstoffzellenvorrichtung 100 erhöhten elektrischen Heizeingangsleistung beaufschlagt.

Dabei wird die Polung der Heizeingangsspannung vorzugsweise so gewählt, dass das Ventil 147 grundsätzlich geschlossen bleibt. Bei Bedarf kann das Ventil 147 zyklisch für eine kurze Zeit, welche vorzugsweise weniger als 2 Sekunden beträgt, umgepolt und damit geöffnet werden, um im Wasserabscheider 128 akkumuliertes Wasser und/oder Anodengas aus den anodenseitigen Gasräumen der elektrochemischen Einheiten 104 abzuführen.

Die im Heizbetriebszustand durch innere ohmsche Verluste im Spül-/Drainageventil 134 entstehende Wärme führt zu einer Aufheizung des Ventilkörpers. Angrenzende Bereiche und Komponenten des Mediensystems 102, insbesondere Strömungskanäle des Mediensystems 102, werden dabei ebenfalls aufgeheizt, und eventuell im Mediensystem 102 vorhandenes Eis wird aufgetaut.

Bei einer Variante dieser vorstehend beschriebenen Ausführungsform ist das Spül-/Drainageventil 134 als ein pulsweitenmoduliertes Ventil (PWM-Ventil) ausgebildet. Dabei wird die Bestromung der elektromagnetischen Betätigungsvorrichtung des Ventils 147 unterbrochen oder die Eingangsspannung der Betätigungsvorrichtung umgepolt, um das Ventil 147 zyklisch in die Ventilzustände "geöffnet" und "geschlossen" zu schalten. Die Verweildauer in den jeweiligen Ventilzuständen wird dabei so variiert, dass der durch das Ventil 147 strömende Volumenstrom stufenlos auf einen gewünschten Wert zwischen der minimalen Durchflussrate (null) und der maximalen Durchflussrate eingestellt wird.

Im Heizbetriebszustand der Brennstoffzellenvorrichtung 100 wird die Pulsweitenmodulation des Spül-/Drainageventils 134 von der Steuervorrichtung 146 so eingestellt, dass das Spül-/Drainageventil 134 eine minimal mögliche Durchströmung zulässt, bei der zyklisch zwischen den Ventilzuständen "geöffnet" und "geschlossen" gewechselt werden kann.

Bei einer weiteren (nicht dargestellten) Variante dieser Ausführungsform werden statt eines kombinierten Spül-/Drainageventils 134 ein separates Spülventil und ein separates Drainageventil verwendet, die beide im Bereich des Anodengas-Auslasses 122 des Stapels 108 angeordnet sind.

Diese beiden separaten Ventile können als monostabile 2/2-NC-Wegeventile ausgebildet sein. Solche Wegeventile sind im stromlosen Zustand geschlossen.

Die Auslässe beider Ventile können mit einem Auslass einer Kathodenseite des Mediensystems der Brennstoffzellenvorrichtung 100 in Fluidverbindung stehen. In diesem Auslassbereich der Brennstoffzellenvorrichtung 100 kann ein Wasserstoffsensor angeordnet sein.

Im Heizbetriebszustand der Brennstoffzellenvorrichtung 100 werden zur Aufheizung des Spülventils und des Drainageventils und deren Umgebung das Spülventil und das Drainageventil jeweils mit einer erhöhten elektrischen Heizeingangsleistung beaufschlagt. Dabei werden zunächst beide Ventile geöffnet. Über die Messung und Analyse des anodenseitigen Gasdrucks, mittels des Drucksensors 115, und die Messung und Analyse der Wasserstoffkonzentration im Auslassbereich des Stapels 108, mittels des (nicht dargestellten) Wasserstoffsensors, ermittelt die Steuervorrichtung 146, ob das Spülventil und das Drainageventil mit Gas und/oder mit Kondensat durchströmt werden oder ob diese Ventile durch im Mediensystem 102 gebildetes Eis blockiert werden.

Wenn eine Durchströmung des Spülventils und des Drainageventils festgestellt wird, wird der Heizvorgang (durch die Beaufschlagung des Spülventils und des Drainageventils mit einer erhöhten elektrischen Heizeingangsleistung) unterbrochen, und die Brennstoffzellenvorrichtung 100 wird in den Standardbetriebszustand geschaltet.

Wenn keine Durchströmung des Spülventils und des Drainageventils mit Gas oder mit Kondensat festgestellt wird, werden diese Ventile 147 so lange von der Steuervorrichtung 146 mit einer erhöhten elektrischen Heizeingangsleistung bestromt, bis eine solche Durchströmung festgestellt wird.

Um einen möglichst großen räumlichen Bereich des Mediensystems 102 der Brennstoffzellenvorrichtung 100 durch das Spül-/Drainageventil 134 und/oder durch das Druckregelventil 140 aufheizen zu können, ist es günstig, wenn die thermische Leitfähigkeit der das jeweilige Ventil 147 umgebenden Bauteile der Brennstoffzellenvorrichtung 100 durch die Auswahl geeigneter Materialien, insbesondere durch die Auswahl geeigneter Materialien für das Medienmodul 144, erhöht wird.

Insbesondere kann vorgesehen sein, dass als Materialien mit erhöhter thermischer Leitfähigkeit metallische Materialien oder Kunststoffmaterialien mit einem Zusatz, welcher deren thermische Leitfähigkeit erhöht, insbesondere mit einem keramischen Zusatz, einem mineralischen Zusatz und/oder einem metallischen Zusatz, verwendet werden.

Insbesondere kann das Medienmodul 144 aus einem metallischen Material oder aus einem Kunststoffmaterial mit einem dessen thermische Leitfähigkeit erhöhenden keramischen, mineralischen und/oder metallischen Zusatz gebildet sein.

## Patentansprüche

1. Brennstoffzellenvorrichtung, umfassend ein Mediensystem (102) zur Zufuhr von fluiden Medien zu elektrochemischen Einheiten (104) der Brennstoffzellenvorrichtung (100) und/oder zur Abfuhr von fluiden Medien aus den elektrochemischen Einheiten (104) der Brennstoffzellenvorrichtung (100),
wobei das Mediensystem (102) mindestens ein Ventil (147) umfasst, dem in einem Standardbetriebszustand der Brennstoffzellenvorrichtung (100) eine elektrische Standardeingangsleistung zuführbar ist, um das Ventil (147) in einem gewünschten Ventilzustand zu halten, und
wobei die Brennstoffzellenvorrichtung (100) in einen Heizbetriebszustand schaltbar ist, in welchem dem mindestens einen Ventil (147) eine elektrische Heizeingangsleistung zuführbar ist, die größer ist als die elektrische Standardeingangsleistung,
**dadurch gekennzeichnet,**
**dass** die Brennstoffzellenvorrichtung (100) einen Drucksensor (115) und/oder einen Konzentrationssensor umfasst, aus dessen Signal ermittelbar ist, ob im Mediensystem (102) eine Blockade durch Eisbildung vorliegt, wobei die Brennstoffzellenvorrichtung (100) in Abhängigkeit vom Ergebnis der Ermittlung in den Heizbetriebszustand oder in den Standardbetriebszustand schaltbar ist.

2. Brennstoffzellenvorrichtung nach Anspruch 1, **dadurch gekennzeichnet, dass** das Ventil (147) elektromagnetisch oder elektromotorisch betätigbar ist.

3. Brennstoffzellenvorrichtung nach einem der Ansprüche 1 oder 2, **dadurch gekennzeichnet, dass** die elektrische Heizeingangsleistung so begrenzbar ist, dass eine Überhitzung des Ventils (147) vermieden wird.

4. Brennstoffzellenvorrichtung nach einem der Ansprüche 1 bis 3, **dadurch gekennzeichnet, dass** das Ventil (147) im Heizbetriebszustand dauerhaft geschlossen oder dauerhaft geöffnet ist.

5. Brennstoffzellenvorrichtung nach einem der Ansprüche 1 bis 3, **dadurch gekennzeichnet, dass** das Ventil (147) im Heizbetriebszustand in einem vorgegebenen Ventilzustand zwischen dem vollständig geschlossenen Zustand und dem vollständig geöffneten Zustand haltbar ist.

6. Brennstoffzellenvorrichtung nach einem der Ansprüche 1 bis 5, **dadurch gekennzeichnet, dass** die dem Ventil (147) im Heizbetriebszustand zuführbare elektrische Heizeingangsleistung unterhalb einer Schaltschwelleneingangsleistung liegt, welche zum Umschalten des Ventils (147) in einen anderen Ventilzustand benötigt wird.

7. Brennstoffzellenvorrichtung nach einem der Ansprüche 1 bis 6, **dadurch gekennzeichnet, dass** das Ventil (147) im Heizbetriebszustand mit einer elektrischen Heizspannung beaufschlagbar ist, deren Polarität der Polarität einer zum Umschalten des Ventils (147) in einen anderen Ventilzustand erforderlichen elektrischen Schaltspannung entgegengesetzt ist.

8. Brennstoffzellenvorrichtung nach einem der Ansprüche 1 bis 7, **dadurch gekennzeichnet, dass** das Ventil (147) im Heizbetriebszustand pulsweitenmoduliert ansteuerbar ist.

9. Brennstoffzellenvorrichtung nach einem der Ansprüche 1 bis 8, **dadurch gekennzeichnet, dass** die dem Ventil (147) im Heizbetriebszustand zugeführte elektrische Heizeingangsleistung in Abhängigkeit von einer mit einer Eisbildung im Mediensystem (102) der Brennstoffzellenvorrichtung (100) korrelierenden Messgröße variierbar ist.

10. Brennstoffzellenvorrichtung nach einem der Ansprüche 1 bis 9, **dadurch gekennzeichnet, dass** das Ventil (147) im Heizbetriebszustand in einem vorgegebenen Ventilzustand verbleibt.

11. Brennstoffzellenvorrichtung nach einem der Ansprüche 1 bis 9, **dadurch gekennzeichnet, dass** das Ventil (147) im Heizbetriebszustand zwischen mehreren verschiedenen Ventilzuständen wechselt.

12. Brennstoffzellenvorrichtung nach einem der Ansprüche 1 bis 11, **dadurch gekennzeichnet, dass** die Brennstoffzellenvorrichtung (100) eine Messvorrichtung zur Ermittlung eines elektrischen Innenwiderstandes einer Betätigungsvorrichtung des Ventils (147) umfasst.

13. Brennstoffzellenvorrichtung nach einem der Ansprüche 1 bis 12, **dadurch gekennzeichnet, dass** das mindestens eine Ventil (147) als ein Medium-Absperrventil, als ein Druckregelventil (140), als ein Drainageventil, als ein Spülventil oder als ein kombiniertes Spül-/Drainageventil (134) ausgebildet ist.

14. Verfahren zum Betreiben einer Brennstoffzellenvorrichtung (100), welche ein Mediensystem (102) zur Zufuhr von fluiden Medien zu elektrochemischen Einheiten (104) der Brennstoffzellenvorrichtung (100) und/oder zur Abfuhr von fluiden Medien aus den elektrochemischen Einheiten (104) der Brennstoffzellenvorrichtung (100) umfasst, wobei das Mediensystem (102) mindestens ein Ventil (147) umfasst,
wobei das Verfahren Folgendes umfasst:
- Ermittlung, ob die Gefahr einer Eisbildung im Mediensystem (102) der Brennstoffzellenvorrichtung (100) vorliegt;
- Schalten der Brennstoffzellenvorrichtung (100) in einen Standardbetriebszustand oder in einen Heizbetriebszustand, in Abhängigkeit von dem Ergebnis der Ermittlung;
- Zuführen einer elektrischen Standardeingangsleistung zu dem Ventil (147), um das Ventil (147) in einem gewünschten Ventilzustand zu halten, wenn die Brennstoffzellenvorrichtung (100) sich in dem Standardbetriebszustand befindet; und
- Zuführen einer elektrischen Heizeingangsleistung zu dem Ventil (147), wenn die Brennstoffzellenvorrichtung (100) sich in dem Heizbetriebszustand befindet;
wobei die Heizeingangsleistung größer ist als die Standardeingangsleistung und
wobei die Brennstoffzellenvorrichtung (100) einen Drucksensor (115) und/oder einen Konzentrationssensor umfasst, aus dessen Signal ermittelbar ist, ob im Mediensystem (102) eine Blockade durch Eisbildung vorliegt, wobei die Brennstoffzellenvorrichtung (100) in Abhängigkeit vom Ergebnis der Ermittlung in den Heizbetriebszustand oder in den Standardbetriebszustand geschaltet wird.

## Claims

1. Fuel cell device, comprising a media system (102) for supplying fluid media to electrochemical units (104) of the fuel cell device (100) and/or for discharging fluid media from the electrochemical units (104) of the fuel cell device (100),
wherein the media system (102) comprises at least one valve (147) to which, in a standard operating state of the fuel cell device (100), an electrical standard input power is suppliable in order to maintain the valve (147) in a desired valve state, and
wherein the fuel cell device (100) is switchable into a heating operating state in which an electrical heating input power that is greater than the electrical standard input power is suppliable to the at least one valve (147),
**characterized in that**
the fuel cell device (100) comprises a pressure sensor (115) and/or a concentration sensor, from the signal of which it is determinable whether a blockage due to ice formation is present in the media system (102), wherein the fuel cell device (100) is switchable into the heating operating state or into the standard operating state in dependence on the result of the determination.

2. Fuel cell device in accordance with Claim 1, **characterized in that** the valve (147) is electromagnetically or electromotively actuatable.

3. Fuel cell device in accordance with either of Claims 1 or 2, **characterized in that** the electrical heating input power is limitable such that overheating of the valve (147) is avoided.

4. Fuel cell device in accordance with any one of Claims 1 to 3, **characterized in that** the valve (147) in the heating operating state is permanently closed or permanently open.

5. Fuel cell device in accordance with any one of Claims 1 to 3, **characterized in that** the valve (147) in the heating operating state is maintainable in a predetermined valve state between the completely closed state and the completely open state.

6. Fuel cell device in accordance with any one of Claims 1 to 5, **characterized in that** the electrical heating input power suppliable to the valve (147) in the heating operating state is below a switching threshold input power which is required for switching the valve (147) into a different valve state.

7. Fuel cell device in accordance with any one of Claims 1 to 6, **characterized in that** the valve (147) in the heating operating state is able to be applied with an electrical heating voltage, the polarity of which is opposite to the polarity of an electrical switching voltage required for switching the valve (147) into a different valve state.

8. Fuel cell device in accordance with any one of Claims 1 to 7, **characterized in that** the valve (147) in the heating operating state is controllable with pulse width modulation.

9. Fuel cell device in accordance with any one of Claims 1 to 8, **characterized in that** the electrical heating input power supplied to the valve (147) in the heating operating state is variable in dependence on a measured variable correlating with an ice formation in the media system (102) of the fuel cell device (100).

10. Fuel cell device in accordance with any one of Claims 1 to 9, **characterized in that** the valve (147) in the heating operating state remains in a predetermined valve state.

11. Fuel cell device in accordance with any one of Claims 1 to 9, **characterized in that** the valve (147) in the heating operating state changes between a plurality of different valve states.

12. Fuel cell device in accordance with any one of Claims 1 to 11, **characterized in that** the fuel cell device (100) comprises a measuring device for determining an electrical internal resistance of an actuating device of the valve (147).

13. Fuel cell device in accordance with any one of Claims 1 to 12, **characterized in that** the at least one valve (147) is configured as a medium shut-off valve, as a pressure-regulating valve (140), as a drainage valve, as a purge valve, or as a combined purge/drainage valve (134).

14. Method for operating a fuel cell device (100) which comprises a media system (102) for supplying fluid media to electrochemical units (104) of the fuel cell device (100) and/or for discharging fluid media from the electrochemical units (104) of the fuel cell device (100), wherein the media system (102) comprises at least one valve (147),
wherein the method comprises the following:
- determining whether there is a risk of ice formation in the media system (102) of the fuel cell device (100);
- switching the fuel cell device (100) into a standard operating state or into a heating operating state in dependence on the result of the determination;
- supplying an electrical standard input power to the valve (147) in order to maintain the valve (147) in a desired valve state when the fuel cell device (100) is in the standard operating state; and
- supplying an electrical heating input power to the valve (147) when the fuel cell device (100) is in the heating operating state;
wherein the heating input power is greater than the standard input power and
wherein the fuel cell device (100) comprises a pressure sensor (115) and/or a concentration sensor, from the signal of which it is determinable whether a blockage due to ice formation is present in the media system (102), wherein the fuel cell device (100) is switchable into the heating operating state or into the standard operating state in dependence on the result of the determination.

## Revendications

1. Dispositif de pile à combustible, comprenant un système de fluides (102) pour l'amenée de fluides à des unités électrochimiques (104) du dispositif de pile à combustible (100) et/ou pour l'évacuation de fluides hors des unités électrochimiques (104) du dispositif de pile à combustible (100),
dans lequel le système de fluides (102) comprend au moins une vanne (147) à laquelle une puissance électrique d'entrée standard peut être fournie dans un état de fonctionnement standard du dispositif de pile à combustible (100) afin de maintenir la vanne (147) dans un état de vanne souhaité, et
dans lequel le dispositif de pile à combustible (100) peut être commuté dans un état de fonctionnement de chauffage dans lequel une puissance électrique d'entrée de chauffage, qui est supérieure à la puissance électrique d'entrée standard, peut être fournie à l'au moins une vanne (147),
**caractérisé en ce que**
le dispositif de pile à combustible (100) comprend un capteur de pression (115) et/ou un capteur de concentration, dont le signal permet de déterminer s'il y a un blocage par formation de glace dans le système de fluides (102), le dispositif de pile à combustible (100) pouvant être commuté dans l'état de fonctionnement de chauffage ou dans l'état de fonctionnement standard en fonction du résultat de la détermination.

2. Dispositif de pile à combustible selon la revendication 1, **caractérisé en ce que** la vanne (147) peut être actionnée de manière électromagnétique ou électromotrice.

3. Dispositif de pile à combustible selon l'une des revendications 1 ou 2, **caractérisé en ce que** la puissance électrique d'entrée de chauffage peut être limitée de manière à éviter une surchauffe de la vanne (147).

4. Dispositif de pile à combustible selon l'une des revendications 1 à 3, **caractérisé en ce que**, dans l'état de fonctionnement de chauffage, la vanne (147) est fermée en permanence ou ouverte en permanence.

5. Dispositif de pile à combustible selon l'une des revendications 1 à 3, **caractérisé en ce que**, dans l'état de fonctionnement de chauffage, la vanne (147) peut être maintenue dans un état de vanne prédéterminé entre l'état totalement fermé et l'état totalement ouvert.

6. Dispositif de pile à combustible selon l'une des revendications 1 à 5, **caractérisé en ce que** la puissance électrique d'entrée de chauffage pouvant être fournie à la vanne (147) dans l'état de fonctionnement de chauffage est inférieure à une puissance d'entrée de seuil de commutation qui est nécessaire pour commuter la vanne (147) dans un autre état de vanne.

7. Dispositif de pile à combustible selon l'une des revendications 1 à 6, **caractérisé en ce que**, dans l'état de fonctionnement de chauffage, la vanne (147) peut être alimentée par une tension électrique de chauffage dont la polarité est opposée à la polarité d'une tension électrique de commutation nécessaire pour commuter la vanne (147) dans un autre état de vanne.

8. Dispositif de pile à combustible selon l'une des revendications 1 à 7, **caractérisé en ce que**, dans l'état de fonctionnement de chauffage, la vanne (147) peut être commandée avec modulation en largeur d'impulsion.

9. Dispositif de pile à combustible selon l'une des revendications 1 à 8, **caractérisé en ce que** la puissance électrique d'entrée de chauffage fournie à la vanne (147) dans l'état de fonctionnement de chauffage peut être modifiée en fonction d'une valeur de mesure corrélée à une formation de glace dans le système de fluides (102) du dispositif de pile à combustible (100).

10. Dispositif de pile à combustible selon l'une quelconque des revendications 1 à 9, **caractérisé en ce que**, dans l'état de fonctionnement de chauffage, la vanne (147) reste dans un état de vanne prédéterminé.

11. Dispositif de pile à combustible selon l'une des revendications 1 à 9, **caractérisé en ce que**, dans l'état de fonctionnement de chauffage, la vanne (147) alterne entre plusieurs états de vanne différents.

12. Dispositif de pile à combustible selon l'une des revendications 1 à 11, **caractérisé en ce que** le dispositif de pile à combustible (100) comprend un dispositif de mesure pour déterminer une résistance électrique interne d'un dispositif d'actionnement de la vanne (147).

13. Dispositif de pile à combustible selon l'une des revendications 1 à 12, **caractérisé en ce que** l'au moins une vanne (147) est conçue comme une vanne d'arrêt de fluide, une vanne de régulation de pression (140), une vanne de drainage, une vanne de rinçage ou une vanne combinée de rinçage/drainage (134).

14. Procédé pour faire fonctionner un dispositif de pile à combustible (100) comprenant un système de fluides (102) pour l'amenée de fluides à des unités électrochimiques (104) du dispositif de pile à combustible (100) et/ou pour l'évacuation de fluides hors des unités électrochimiques (104) du dispositif de pile à combustible (100), dans lequel le système de fluides (102) comprend au moins une vanne (147),
dans lequel le procédé comprend les étapes suivantes :
- déterminer s'il y a un risque de formation de glace dans le système de fluides (102) du dispositif de pile à combustible (100) ;
- commuter le dispositif de pile à combustible (100) dans un état de fonctionnement standard ou dans un état de fonctionnement de chauffage en fonction du résultat de la détermination ;
- fournir une puissance électrique d'entrée standard à la vanne (147) pour maintenir la vanne (147) dans un état de vanne souhaité lorsque le dispositif de pile à combustible (100) est dans l'état de fonctionnement standard ; et
- fournir une puissance électrique d'entrée de chauffage à la vanne (147) lorsque le dispositif de pile à combustible (100) est dans l'état de fonctionnement de chauffage ;
dans lequel la puissance d'entrée de chauffage est supérieure à la puissance d'entrée standard, et
dans lequel le dispositif de pile à combustible (100) comprend un capteur de pression (115) et/ou un capteur de concentration, dont le signal permet de déterminer s'il y a un blocage par formation de glace dans le système de fluides (102), le dispositif de pile à combustible (100) étant commuté dans l'état de fonctionnement de chauffage ou dans l'état de fonctionnement standard en fonction du résultat de la détermination.
